# EUROPÄISCHE PATENTSCHRIFT

(11) **EP 2 780 897 B1**
(45) Veröffentlichungstag und Bekanntmachung des Hinweises auf die Patenterteilung: **24.08.2016**
(21) Anmeldenummer: 12788180.3
(22) Anmeldetag: 14.11.2012
(51) Int. Cl.: B65G 43/08, B65G 54/02, G07D 3/16, G07D 3/14, G07D 13/00

(54) **TRANSPORTEINRICHTUNG FÜR MÜNZEN**
CONVEYOR DEVICE FOR COINS
DISPOSITIF DE TRANSPORT POUR PIÈCES DE MONNAIE

(30) Priorität: 18.11.2011 DE 102011055538
(43) Veröffentlichungstag der Anmeldung: 24.09.2014
(73) Patentinhaber: Novomatic AG, 2352 Gumpoldskirchen (AT)
(72) Erfinder: FAUL, Thomas, 67659 Kaiserslautern (DE); LUFT, Michael Rudolph, 64297 Darmstadt (DE)
(74) Vertreter: Müller, Jochen
(86) Internationale Anmeldenummer: PCT/EP2012/072534
(87) Internationale Veröffentlichungsnummer: WO 2013/072325

(56) Entgegenhaltungen:
- WO-A1-94/04997
- DE-A1- 10 261 819
- DE-A1- 19 841 860
- DE-A1- 19 907 706
- US-A- 3 419 209
- US-A- 5 639 206

## Beschreibung

Die Erfindung bezieht sich auf eine Transporteinrichtung für Münzen mit Mitteln zum Bewegen zumindest einer Münze nach dem Oberbegriff des Anspruchs 1 und ein Gerät dazu.

Bei beliebigen Geräten, die mit Münzen gespeist werden, beispielsweise Warenverkaufsautomaten, Bankautomaten, geldbetätigten Unterhaltungsspielgeräten, besteht die Problematik, dass die Münzen aufgrund ihrer Gewichtskraft in eine Kasse oder dergleichen gelangen müssen, wodurch die Gestaltungsfreiheit bei der Anordnung von Komponenten im Inneren des Gerätes eng begrenzt ist. Damit eine Münze, die z. B. verschmutzt sein kann, zuverlässig transportiert wird, ist ein Mindestgefälle des Münzkanals zu beachten. In der Praxis erweist es sich als schwierig den Transport der oftmals unmagnetischen Münzen entgegen der Gewichtskraft zu realisieren, da innerhalb der Geräte nur wenig Platz für eine Transporteinrichtung zur Verfügung steht. Transportbänder und Ähnliches scheiden aufgrund ihres Platzbedarfs als Fördereinrichtungen aus.

Die DE 102 61 819 A1 offenbart ein Verfahren und eine Vorrichtung zum Sortieren, Zählen bzw. Prüfen von Münzen.

Hierbei weist die Vorrichtung eine Vereinzelungsvorrichtung für die Münzen auf. Zum Beschleunigen der Münzen beim Verlassen der Vereinzelungsvorrichtung ist ein Beschleunigungsrad vorgesehen, dessen Mantelfläche beim Beschleunigen der Münzen an den Münzen zur Anlage kommt.

Die US 3 419 209 A offenbart eine Transporteinrichtung für Münzen mit Mitteln zum Bewegen zumindest einer Münze in einer vorgegebenen Bewegungsrichtung, die nicht der Wirkungsrichtung der Schwerkraft entspricht, unter einer Kraft frei von der Einwirkung eines bewegten mechanischen Bauteils, das die Münzen unter Einsatz von Luft oder Wasser in einer Röhre beschleunigt.

Es ist Aufgabe der Erfindung, eine Transporteinrichtung und ein Gerät mit einer Transporteinrichtung zu schaffen, die bzw. das verschleißfrei, zuverlässig sowie schnell Münzen transportiert und dabei eine verhältnismäßig kurze Ansprechzeit aufweist.

Erfindungsgemäß wird die Aufgabe durch die Merkmale der unabhängigen Ansprüche gelöst.

Die Merkmale der Unteransprüche stellen vorteilhafte Ausgestaltungen dar.

Eine Transporteinrichtung für Münzen umfasst Mittel zum Bewegen zumindest einer Münze in einer vorgegebenen Bewegungsrichtung, die nicht der Wirkungsrichtung der Schwerkraft entspricht, unter einer Kraft frei von der Einwirkung eines bewegten mechanischen Bauteils, wobei die im Inneren eines mit Münzen zu betreibenden Gerätes angeordnete Transporteinrichtung mit einer das Vorhandensein der Münze erkennenden Detektionseinrichtung gekoppelt ist, um die Münzen bedarfsweise in der vorgegebenen Bewegungsrichtung zu beschleunigen.

Die Münzen werden von den Mitteln beispielsweise in einem Kräftefeld transportiert, ohne dass ein mechanisches Bauteil in irgendeiner Art an der Münze angreift, um diese zu beschleunigen, wobei die Mittel bedarfsweise aktivierbar sind, nämlich vorzugsweise wenn die Detektionseinrichtung das Vorhandensein einer zu transportierenden Münze erkannt hat. Mittels des Verfahrens lassen sich beispielsweise auf einer ebenen Fläche liegende Münzen beschleunigen und zu einem nahezu beliebigen Ort transportieren. Auch eine Vereinzelung von Münzen die ungeordnet über- und nebeneinander als Schüttung vorliegen, ist möglich. Münzen, die sich im freien Fall befinden, werden derart berührungslos kraftbeaufschlagt, dass sie ihre Bewegungsrichtung ändern. Sonach ist die Einhaltung bestimmter Winkelstellungen zum schwerkraftgesteuerten Transport der Münzen innerhalb des Gerätes nicht erforderlich und der Konstrukteur hat einen relativ großen Gestaltungsspielraum bei der Anordnung der Transportwege für die Münzen, die in der Regel von einem Münzeinwurfschlitz zu einer Kasse und/oder Auszahleinheit, gegebenenfalls unter Zwischenanordnung einer Münzprüfereinheit, befördert werden müssen. Die Transportvorrichtung arbeitet im Wesentlichen verschleißfrei. Die Detektionseinrichtung kann auf optischer, gravimetrischer oder dergleichen Wirkprinzipien beruhen. Sie kann auch auf der Basis einer Vorgeschalteten elektrischen/elektronischen Einrichtung, die Münzen detektiert oder prüft, arbeiten.

Um die Bewegungsrichtung der Münzen zu beeinflussen bzw. die Münzen in eine gewünschte Richtung zu beschleunigen, werden die Münzen durch ein strömendes Fluid, insbesondere Luft, oder mittels eines Magnetfeldes, insbesondere eines Wander-Magnetfeldes berührungslos transportiert.

Das Wander-Magnetfeld, oder auch magnetisches Wanderfeld genannt, induziert in der metallischen Münze einen Wirbelstrom, der gemäß der Lenzschen Regel wiederum ein dem Wander-Magnetfeld entgegen wirkendes Magnetfeld erzeugt. Wenn sich das Wander-Magnetfeld relativ zu der Münze schnell bewegt, dann wird die Münze durch das Magnetfeld mitgenommen. Dieser Effekt, der umgekehrt von einer Wirbelstrombremse bekannt ist, wird in Rahmen der Erfindung zum Transport von Münzen, insbesondere entgegen ihrer Gewichtskraft, ausgenutzt. Ein ähnliches Wirkprinzip ist von einem Linearmotor bekannt. Im Wander-Magnetfeld wird die Münze durch den induzierten Strom zwar relativ leicht erwärmt, dies wirkt sich aber nicht negativ aus. Es ist selbstverständlich auch möglich, eine Münze durch einen Fluidstrom in eine gewünschte Richtung zu bewegen, wobei in Abhängigkeit von dem gewählten Fluid die Einrichtung zur Erzeugung des Fluidstroms beispielsweise eine Pumpe, einen Ventilator oder einen Kompressor umfasst. Der Konstrukteur eines solchen Gerätes ist nicht an bestimmte Mindest-Gefälle zum zuverlässigen Münztransport gebunden, vielmehr kann die Münze auch über horizontale und ansteigende Abschnitte transportiert werden.

Vorteilhafterweise umfasst das Gerät eine Münzauflagefläche und/oder einen Münzkanal, wobei der Münzauflagefläche bzw. dem Münzkanal als Mittel zum Bewegen der Münze zumindest abschnittsweise mindestens ein Magnetelement zur Erzeugung eines die Münze befördernden Wander-Magnetfeldes zugeordnet ist. Durch den Transport der Münzen mittels der Münzauflagefläche bzw. dem Münzkanal beispielsweise über etwa 2 bis 3 cm lange Abschnitte zugeordnete Wander-Magnetfelder, ist es möglich, die Münzen in einem annähernd beliebigen Verlauf durch das Gerät zu führen oder Münzen, die in einer Schüttung vorliegen zu vereinzeln.

In Ausgestaltung steht das Magnetelement mit einer Steuerung in Verbindung, die mit der das Vorhandensein einer Münze erkennenden Detektionseinrichtung gekoppelt ist, um das die Münze befördernde Wander-Magnetfeld bedarfsweise zu erzeugen. Demnach wird das magnetische Wanderfeld nur dann erzeugt, wenn sich eine zu transportierende Münze auf der der Münzauflagefläche oder im Münzkanal, insbesondere im Bereich der Felderzeugung, befindet, wodurch Energie eingespart wird.

Da die Münze in der Regel nicht im gesamten Verlauf des Münzkanals zwangsgesteuert transportiert werden muss, ist zweckmäßigerweise das Magnetelement in einem Bereich der Münzauflagefläche bzw. des Münzkanals angeordnet, in dem eine Beschleunigung der Münze zu deren Transport erforderlich ist, vorzugsweise an einen potenziell höher gelegenen Ort, insbesondere in oder vor einem bogenförmigen Verlaufsabschnitt oder einem Steigungsabschnitt, oder einem Gefälleabschnitt mit geringer Neigung.

Zur Erzeugung des Wander-Magnetfeldes zur Beschleunigung der Münze sind als Magnetelement vorteilhafterweise mindestens ein rotierender Dauermagnet oder mehrere auf dem Umfang eines Drehkörpers angeordnete Einzelmagnete oder eine Elektromagnetanordnung vorgesehen. Sowohl der, beispielsweise als Stabmagnet ausgeführte, Dauermagnet als auch der Drehkörper mit den Einzelmagneten wird beispielsweise bei der Erfassung bzw. Erkennung einer zu beschleunigenden Münze derart schnell in Rotation versetzt, dass sich das Wander-Magnetfeld relativ zu der Münze schnell bewegt und das Magnetfeld die Münze mitnimmt. Ein den Dauermagnet oder den Drehkörper drehender Elektromotor wird durch die Steuerung bei einer vorhandenen Münze auf der Münzauflagefläche oder im Münzkanal in Bewegung versetzt.

Zweckmäßigerweise regelt die Steuerung die Spannungsversorgung einer Spulenanordnung der Elektromagnete der Elektromagnetanordnung. Wenn also die Detektionseinrichtung feststellt, dass sich eine Münze im Münzkanal oder auf der Münzauflagefläche, also in einem Bereich, in dem eine Kraftbeaufschlagung der Münze zu deren Transport erforderlich ist, befindet, ergeht ein entsprechendes Signal an die Steuerung, die wiederum die Spulen der Elektromagnete der Elektromagnetanordnung mit Spannung versorgt, um das Wander-Magnetfeld zum Transport der Münze zu erzeugen. Selbstverständlich ist es auch möglich, dass die Steuerung in das Management eines Motors für die Drehbewegung des Magneten bzw. des die Magnete tragenden Drehkörpers eingreift, um beispielsweise unterschiedliche Drehzahlen einzustellen.

Vorteilhafterweise bilden die Elektromagnete die Münzauflagefläche und/oder den Münzkanal. Selbstverständlich ist es nicht erforderlich, dass die Elektromagnete die komplette Münzauflagefläche oder den gesamten Münzkanal ausgestalten, es ist aber nicht notwendig in den Bereichen, in denen Elektromagnete zum Transport von Münzen vorgesehen sind, eine zusätzliche Auflagefläche bzw. einen separaten Kanal vorzusehen.

Nach einer Weiterbildung weist ein im Wesentlichen E-förmiges oberes Joch spulenumwickelte Anker auf, wobei die Münzauflagefläche bzw. der Münzkanal zwischen freien Stirnseiten der Anker und einem dazu beabstandeten unteren Joch ausgebildet ist. Die einzelnen Spulen werden nacheinander in bekannter Weise, beispielsweise mittels einer Dreieckschaltung, angesteuert, also mit Spannung beaufschlagt, um ein Wandermagnetfeld zu erzeugen, das den Transport der Münze durch den Luftspalt des Jochs bewirkt. Die Richtungsangaben oben und unten sind nicht als eine beschränkende absolute Richtungs- bzw. Lageangabe zu verstehen, da eine beliebige Ausrichtung erfolgen kann, wobei lediglich das obere und das untere Joch im Wesentlichen parallel zueinander angeordnet sind.

Um den Transport einer Münze mittels eines Fluides zu realisieren, ist bevorzugt in einem Münzkanal als Mittel zum Bewegen der Münzen ein Ventilator zum Erzeugen einer die Münze transportierenden Luftströmung zugeordnet, der zu seiner bedarfsweisen Spannungsversorgung mit der Steuerung in Verbindung stehet, die mit der das Vorhandensein einer Münze erkennenden Detektionseinrichtung gekoppelt ist. Der Münzkanal kann in einer horizontalen Ebene oder einer Steigung angeordnet sein und einen gelochten Zwischenboden aufweisen, wobei die Münzen oberhalb des Zwischenbodens befördert werden und unterhalb des Zwischenbodens Luft in den Münzkanal eingeblasen wird, vorzugsweise mittels des Ventilators, der bevorzugt auch eine Luftströmung zur Kühlung des Gerätes erzeugt.

Es ist für den Fachmann erkennbar, dass die Erfindung in einer Vielzahl unterschiedlicher Geräte, beispielsweise beliebigen Bank-, Geld- oder Warenautomaten, zum Transport von Münzen eingesetzt werden kann. Eine beanspruchte Verwendung ist ein Gerät, insbesondere Unterhaltungsspielgerät, mit einem Münzeinwurfschlitz, der durch einen Münzkanal mit einem Münzprüfer und einer Münzkasse verbunden ist, wobei dem Münzkanal zumindest abschnittsweise eine zuvor erläuterte Transporteinrichtung zugeordnet ist.

Im Weiteren erfolgt die Verwendung der oben beschriebenen Transporteinrichtung in einem Gerät, insbesondere Unterhaltungsspielgerät, mit einer Auszahleinheit für Münzen, der die Transporteinrichtung zugeordnet ist, wobei eine Steuerung der Auszahleinheit mit den Mitteln und/oder der Detektionseinrichtung gekoppelt ist. Die Auszahleinheit kann beispielsweise die Münzauflagefläche aufweisen, auf der die Münzen in einer Schüttung vorliegen und die Transporteinrichtung dient zur Vereinzelung und/oder dem Transport der Münzen und kann, beispielsweise mit einer entsprechenden Sensorik, die insbesondere die Wertigkeit von Münzen erfasst, gekoppelt, die Münzen zur Auszahlung transportieren, also in einen Bereich außerhalb des Gerätes, auf den ein Benutzer des Unterhaltungsspielgerätes Zugriff hat. Hierbei erkennt die Detektionseinrichtung das Vorhandensein von Münzen. Selbstverständlich kann die Detektionseinrichtung auch derart ausgebildet sein, dass sie die Wertigkeit einer vorhandenen Münze erkennt.

Vorzugsweise ist einem Münzstapelrohr zur Einspeisung und/oder zur Ausgabe einer einzelnen Münze die Transporteinrichtung vor- oder nachgeschaltet. Zweckmäßigerweise umfasst die Auszahleinheit mehrere hintereinander angeordnete Münzstapelrohre mit unterschiedlichen Durchmessern, wobei die Münzen mittels der Transporteinrichtung zur Sortierung nach ihrem Durchmesser oberhalb der Münzstapelrohre von dem Münzstapelrohr mit dem kleinsten Durchmesser zu dem Münzstapelrohr mit dem größten Durchmesser förderbar sind. Durch die, gegebenenfalls dem Unterhaltungsspielgerät entnehmbaren, Münzstapelrohre ist eine geordnete Aufbewahrung der Münzen möglich.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand von mehreren Ausführungsbeispielen unter Bezugnahme auf die zugehörigen Zeichnungen näher erläutert. Es zeigt:
- Fig. 1: eine Darstellung eines Längsschnittes einer Elektromagnetanordnung der Transporteinrichtung für Münzen,
- Fig. 2: eine Darstellung eines Querschnittes einer Elektromagnetanordnung,
- Fig. 3: eine Vorderansicht einer Versuchsanordnung zu der Transporteinrichtung für Münzen mit rotierend angeordneten Dauermagneten,
- Fig. 4: eine Seitenansicht der Versuchsanordnung nach Fig. 3,
- Fig. 5: eine Darstellung der Transporteinrichtung nach Fig. 3 in alternativer Ausgestaltung,
- Fig. 6: eine schematische Darstellung einer alternativen Transporteinrichtung,
- Fig. 7: eine schematische Schnittdarstellung einer Auszahleinheit mit zugeordneter Transporteinrichtung,
- Fig. 8: eine schematische Schnittdarstellung einer alternativen Auszahleinheit mit zugeordneter Transporteinrichtung,
- Fig. 9: eine schematische Schnittdarstellung einer weiteren alternativen Auszahleinheit mit zugeordneter Transporteinrichtung,
- Fig. 10: eine schematische Schnittdarstellung einer dritten alternativen Auszahleinheit mit zugeordneter Transporteinrichtung und
- Fig. 11: eine schematische Schnittdarstellung einer vierten alternativen Auszahleinheit mit zugeordneter Transporteinrichtung.

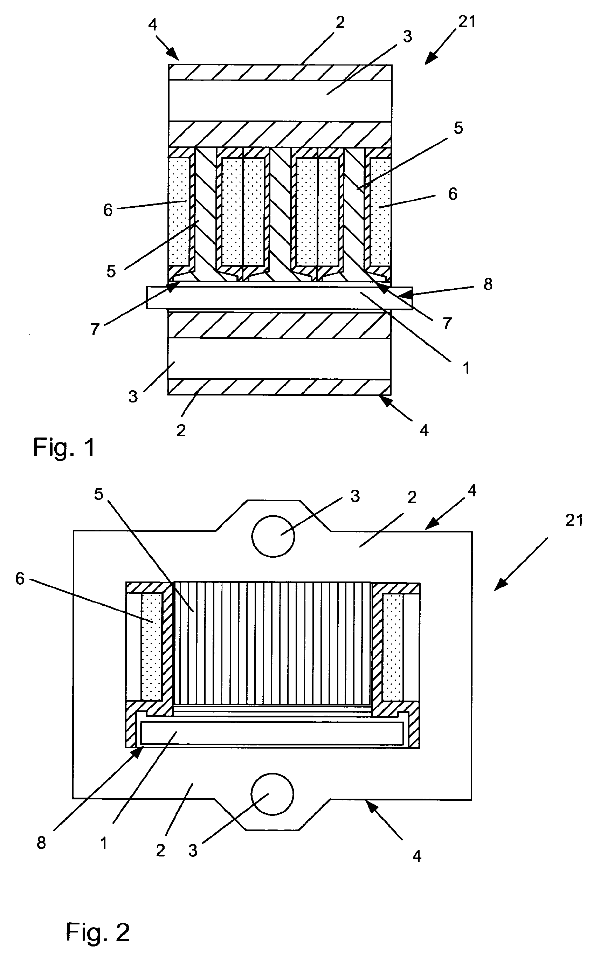

Die Transporteinrichtung 21 für eine Münze 1 umfasst gemäß den Fig. 1 und 2 eine Elektromagnetanordnung, die im Wesentlichen durch ein oberes und ein unteres äußeres Joch 2 mit Montagebohrungen 3 für Befestigungsschrauben und drei gleichmäßig zueinander beabstandete innere Joche 2, die als Anker 5 dienen, gebildet ist, wobei das obere und das untere Joch 2 miteinander verbunden sind und die mit jeweils einer Spule 6 umwickelten Anker 5 Magnetelemente 4 darstellen.

Die freien Stirnseiten 7 der Anker 5 sind beabstandet zu dem Bereich des unteren Jochs 2 und bilden in diesem Zwischenraum einen Münzkanal 8. Die drei vorhandenen Spulen 6 sind zur Erzeugung eines die Münze 1 durch den Münzkanal 8 bewegenden Wander-Magnetfeldes in bekannter Weise mittels einer Dreieckschaltung mit Spannung versorgt, sodass ein Dreiphasen-Wechselstrom mit zeitlich gleichmäßig zueinander versetzten Phasen zur Spannungsversorgung der einzelnen Spulen 6 zur Verfügung steht. Durch die zeitliche Abfolge der Spannungsbeaufschlagung der Spulen 6 entsteht das Wander-Magnetfeld mit einer definierten Richtung.

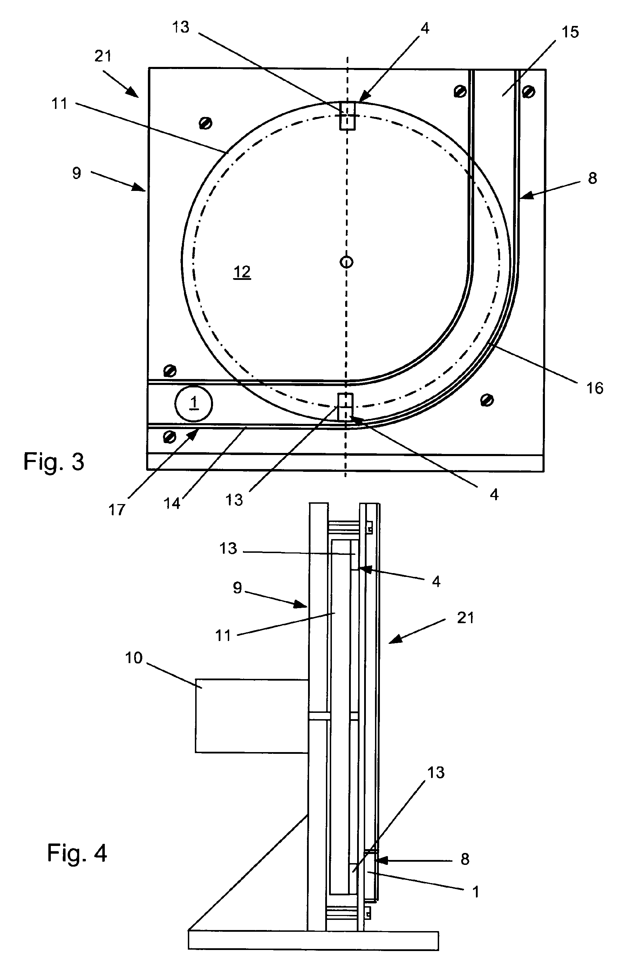

Bei der Versuchsanordnung nach den Fig. 3 und 4 ist an einem Gestell 9 ein mit einem Elektromotor 10 gekoppelter Drehkörper 11 in Form einer Scheibe 12 gelagert, wobei dem Drehkörper 11 im Bereich seines äußeren Umfangs diametral gegenüberliegend mehrere als Dauermagnete 13 ausgeführte Magnetelemente 4 zugeordnet sind. Parallel und beabstandet zu dem Drehkörper 11 ist auf der den Dauermagneten 13 zugewandten Seite der Münzkanal 8 angeordnet, in dem die Münze 1 in einem unteren horizontalen Abschnitt 14 zugeführt wird. Der horizontale Abschnitt 14 des Münzkanals 8 bildet eine Münzauflagefläche 17 und ist über einen Bogen 16 mit einem vertikalen Abschnitt 15 verbunden, wobei der Bogen 16 auf dem gleichen Radius verläuft, den die Dauermagnete 13 bei einer Drehung des Drehkörpers 11 beschreiben.

Wenn der Drehkörper 11 mit einer verhältnismäßig großen Drehzahl in einer dem Uhrzeigersinn entgegengesetzten Richtung in Rotation versetzt wird, wird die Münze 1 aus dem horizontalen Abschnitt 14 des Münzkanals 8 in Richtung des Bogens 16 mitgenommen und derart beschleunigt, dass sie den vertikalen Abschnitt 15 des Münzkanals 8 verlässt. Die Austrittsgeschwindigkeit der Münze 1 aus dem Münzkanal 8 der Versuchsanordnung hängt im Wesentlichen von der Drehzahl des Drehkörpers 11 ab.

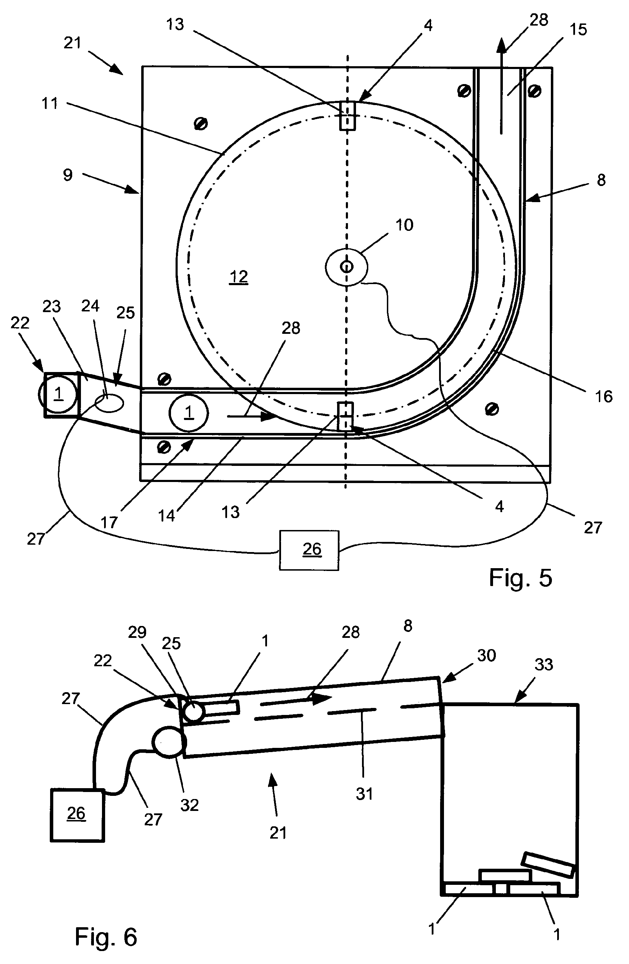

Nach Fig. 5 ist dem Münzkanal 8 eingangsseitig ein Münzeinwurfschlitz 22 zugeordnet, in dem sich eine Münze 1 befindet, die über einen geneigten Zuführkanal 23 in den Münzkanal gelangt. In dem Zuführkanal 23 befindet sich eine optisch wirksame Einrichtung 24 einer Detektionseinrichtung 25, die mittels elektrischer Leitungen 27 mit einer Steuerung 26 zur Signalauswertung bzw. Signalverarbeitung verbunden ist, wobei die Steuerung 26 wiederum über Leitungen 27 mit dem Elektromotor 10 derart verbunden ist, dass sie dessen Spannungsversorgung ein- bzw. ausschalten kann. Erkennt die Detektionseinrichtung 25 das Vorhandensein einer Münze 1 in dem Zuführkanal 23, dann bewirkt sie eine Spannungsversorgung des Elektromotors 10, der daraufhin in einer dem Uhrzeigersinn entgegengesetzten Richtung in Rotation versetzt wird, um die die Münze 1 aus dem horizontalen Abschnitt 14 des Münzkanals 8 entsprechend dem Pfeil 28 in Richtung des Bogens 16 mitzunehmen und derart zu beschleunigen, dass sie den vertikalen Abschnitt 15 des Münzkanals 8 in Richtung des Pfeils 28 nach oben, also entgegen der Wirkungsrichtung der Schwerkraft, verlässt.

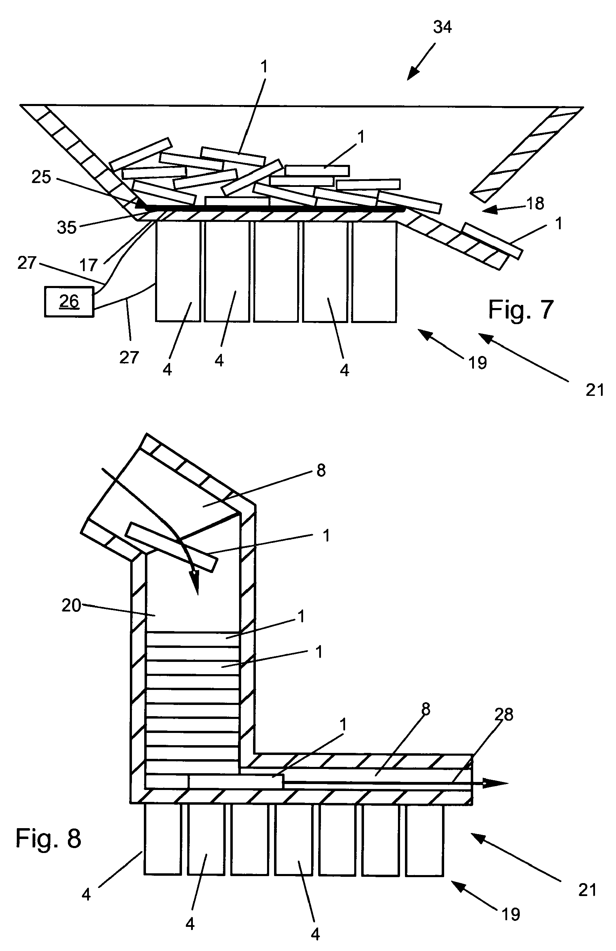

In alternativer Ausgestaltung umfasst die Transporteinrichtung 21 nach Fig. 7 einen in einer Steigung von einem Münzeintritt 29, der beispielsweise durch einen Münzeinwurfschlitz 22 gebildet ist, zu einem potenziell höher liegenden Münzaustritt 30 verlaufenden Münzkanal 8, in dem sich entlang dessen Längserstreckung ein gelochter Zwischenboden 31 befindet. IM Bereich des Münzeintritts 29 befindet sich die über die Leitung 27 mit der Steuerung 26 verbundene Detektionseinrichtung 26 zur Erkennung der Münze 1. Stellt die Detektionseinrichtung 26 fest, dass sich eine Münze 1 in dem Münzkanal 8 oberhalb des gelochten Zwischenbodens 31 befindet, sendet sie ein entsprechendes Signal an die Steuerung 26, die beispielsweise in eine Steuereinheit eines Gerätes, insbesondere eine Geldverarbeitungssteuerung oder eine Spielablaufsteuerung eines Unterhaltungsspielgerätes oder dessen Geldmanagementsteuerung integriert sein kann. Die Steuerung 26 bewirkt ein Einschalten der Spannungsversorgung eines Ventilators 32, der einen Luftstrom unter dem Zwischenboden 31 erzeugt, um die Münze 1 in Richtung des Pfeils 28 zu bewegen. Am Ende des Münzkanals 8, also im Bereich des Münzaustritts 30, befindet sich eine, vorzugsweise dem Gerät entnehmbare, Münzkasse 33, in der die Münzen 1 gesammelt werden.

Für den Fachmann ist die Umsetzung der Transporteinrichtung in einem mit Münzen 1 zu betreibenden Gerät einfach erkennbar. In einem Anschnitt eines Münzkanals 8 hinter dem Münzeinwurfschlitz 22, also im Inneren des Gerätes, wird die Transporteinrichtung 21 mit ihren unterschiedlichen Magnetelementen 4 dort angeordnet, wo eine Beschleunigung der Münze 1 zur Gewährleistung eines zuverlässigen Transports erforderlich ist.

Nach Fig. 7 befinden sich mehrere Münzen 1 in einer Schüttung auf der Münzauflagefläche 17 einer Auszahleinheit 34, die in eine Auszahlöffnung 18 mündet, wobei die Auszahleinheit 34 die Detektionseinrichtung 25 umfasst, die vorliegend als bodenseitig angeordnete Wiegezelle 35 ausgebildet und mit der Steuerung 26 über die Leitung 27 verbunden ist, wobei die Steuerung mit der Elektromagnetanordnung 19 der Transporteinrichtung 21 zu deren bedarfsweiser Spannungsversorgung in Verbindung steht. Die unterhalb der Münzauflagefläche 17 installierte Elektromagnetanordnung 19 umfasst mehrere unterschiedlich erregbare Magnetelemente 4 zur Erzeugung eines Wander-Magnetfeldes zur Vereinzelung und zum Transport der Münzen 1. Spezifische weitere Sensoren sorgen über den Controller der Steuerung 26 für eine intelligente Führung des Wander-Magnetfeldes, um die Schüttung der Münzen 1 aufgrund einer entsprechenden Wechseldynamik bestimmter Bereiche des Magnetfeldes zum Auseinanderrutschen zu bewegen.

Fig. 8 zeigt ein Münzstapelrohr 20, das oberseitig mit dem Münzkanal 8 zur schwerkraftgesteuerten Einspeisung von Münzen 1 in Verbindung steht. Dem unterseitig angeordneten Münzkanal 8 ist die Elektromagnetanordnung 19 mit den unterschiedlich erregbaren Magnetelementen 4 zur Erzeugung eines Wander-Magnetfeldes zugeordnet, die ein vereinzeltes Ausschleusen der Münzen 1 aus dem Münzstapelrohr 20 bewirkt. Selbstverständlich ist auch hier die Elektromagnetanordnung 19 zur gezielten Ansteuerung bzw. Spannungsbeaufschlagung mit einer entsprechenden Steuerung 26 verbunden.

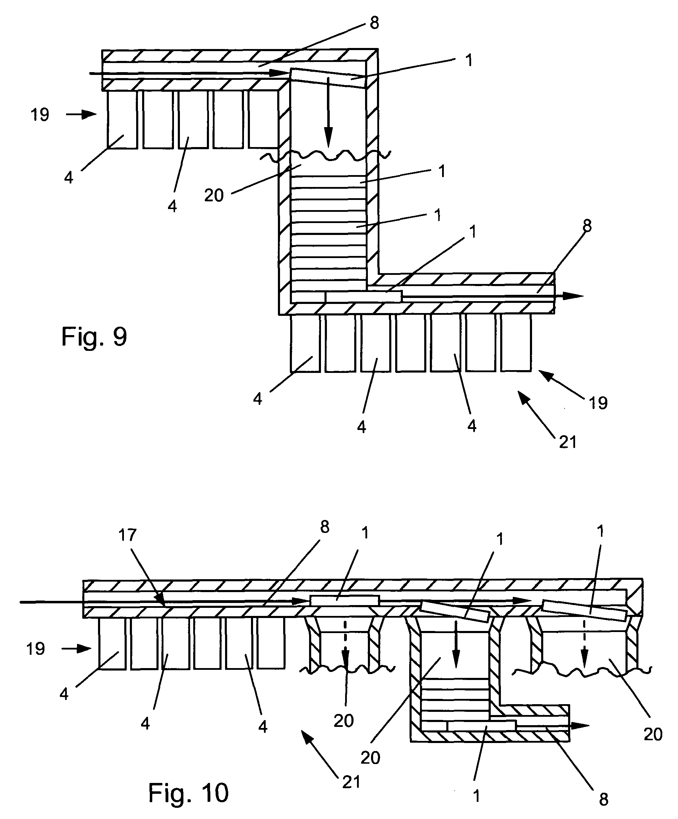

Gemäß Fig. 9 ist sowohl dem oberseitigen Münzkanal 8 zur Einspeisung von Münzen 1 in das Münzstapelrohr 20 als auch dem unterseitigen Münzkanal 8 zur Entnahme der Münzen 1 aus dem Münzstapelrohr 20 jeweils eine Elektromagnetanordnung 19 zur Erzeugung des Wander-Magnetfeldes zugeordnet.

Nach Fig. 10 ist der Münzkanal 8 oberhalb mehrerer hintereinander angeordneter Münzstapelrohre 20 mit unterschiedlichen Durchmessern angeordnet, wobei die Elektromagnetanordnung 19 als Teil des Münzkanals 8 die Münzauflagefläche 17 bildet. Durch das Wander-Magnetfeld werden die Münzen 1 mit unterschiedlichen Durchmessern zu ihrer Sortierung über die Münzstapelrohre 20 transportiert, wobei die Förderung von dem Münzstapelrohr 20 mit dem kleinsten Durchmesser zu dem Münzstapelrohr 20 mit dem größten Durchmesser erfolgt. Bedingt durch die unterschiedlichen Massen und Durchmesser der Münzen 1 entstehen bei gleichen Feldgeschwindigkeiten unterschiedliche Transportgeschwindigkeiten in Richtung der Pfeile 28. Hierdurch liegt eine Information über die Sorte der Münze 1 vor, die ein Controller der Steuerung 26 dazu verwendet das Wander-Magnetfeld an einer bestimmten Stelle anzuhalten, damit die Münze 1 in ein spezifisches Münzstapelrohr 20 fällt. Hierbei spielt der Durchmesser der Münze 1 in Bezug auf den Durchmesser des Münzstapelrohrs 20 eine selektive Rolle. Es kann nach der Identifikation einer Münze 1 bzw. deren Wertigkeit durch einen Controller der Steuerung 26 auch eine nicht dargestellte elektromechanische Klappe über dem entsprechenden Münzstapelrohr 20 geöffnet werden, damit die Münze 1 in das Münzstapelrohr 20 gelangt.

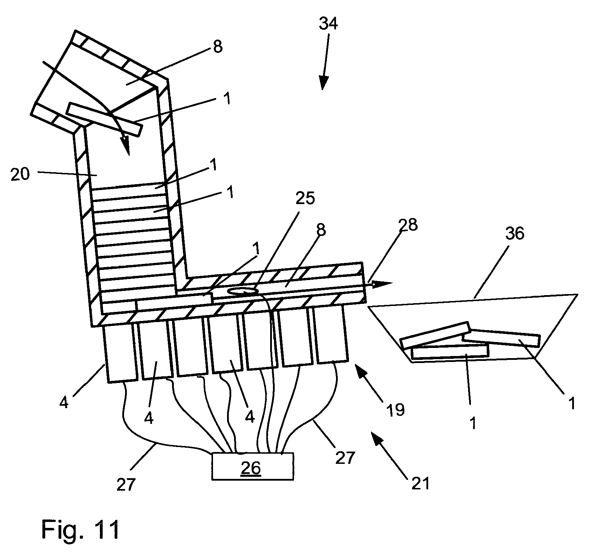

Bei der einer Auszahleinheit 34 nach Fig. 11 die im Wesentlichen dem Beispiel nach Fig. 8 entspricht, gelangen Münzen 1 durch den Münzeintritt 29, der mit einer Vereinzelungsvorrichtung, wie sie beispielsweise in Fig. 7 beschrieben ist, gekoppelt wein kann, durch den Münzkanal 8 unter Wirkung der Schwerkraft in das ein Münzstapelrohr 20, dem unterseitig der in einer Steigung zu dem Münzaustritt 30 verlaufende Münzkanal 8 zugeordnet ist.

Unter dem ansteigenden Münzkanal 8 mit der Detektionseinrichtung 25 ist die Elektromagnetanordnung 19 mit den unterschiedlich erregbaren Magnetelementen 4 zur Erzeugung eines Wander-Magnetfeldes vorgesehen, die ein vereinzeltes Ausschleusen der Münzen 1 aus dem Münzstapelrohr 20 durch ein Zusammenwirken mit der Steuerung 26 bewirkt. Der Münzaustritt 30 mündet in eine Auszahlschale 36, die für einen Benutzer des Gerätes zugänglich ist.

**Bezugszeichenliste**

| | | | |
|---|---|---|---|
| 1. | Münze | 28. | Pfeil |
| 2. | Joch | 29. | Münzeintritt |
| 3. | Magnet | 30. | Münzaustritt |
| 4. | Magnetelement | 31. | Zwischenboden |
| 5. | Anker | 32. | Ventilator |
| 6. | Spule | 33. | Münzkasse |
| 7. | Stirnseite | 34. | Auszahleinheit |
| 8. | Münzkanal | 35. | Wiegezelle |
| 9. | Gestell | 36. | Auszahlschale |
| 10. | Elektromotor | | |
| 11. | Drehkörper | | |
| 12. | Scheibe | | |
| 13. | Dauermagnet | | |
| 14. | Abschnitt | | |
| 15. | Abschnitt | | |
| 16. | Bogen | | |
| 17. | Münzauflagefläche | | |
| 18. | Auszahlöffnung | | |
| 19. | Elektromagnetanordnu ng | | |
| 20. | Münzstapelrohr | | |
| 21. | Transporteinrichtung | | |
| 22. | Münzeinwurfschlitz | | |
| 23. | Zuführkanal | | |
| 24. | Einrichtung | | |
| 25. | Detektionseinrichtung | | |
| 26. | Steuerung | | |
| 27. | Leitung | | |

## Patentansprüche

1. Transporteinrichtung für Münzen (1) mit Mitteln zum Bewegen zumindest einer Münze (1) in einer vorgegebenen Bewegungsrichtung, die nicht der Wirkungsrichtung der Schwerkraft entspricht, unter einer Kraft frei von der Einwirkung eines bewegten mechanischen Bauteils, **dadurch gekennzeichnet, dass** die Transporteinrichtung (21) im Inneren eines mit Münzen (1) zu betreibenden Gerätes angeordnet und mit einer das Vorhandensein der Münze (1) erkennenden Detektionseinrichtung (25) gekoppelt ist, um die Münzen (1) bedarfsweise in der vorgegebenen Bewegungsrichtung (28) zu beschleunigen.

2. Transporteinrichtung nach Anspruch 1, **dadurch gekennzeichnet, dass** das Gerät eine Münzauflagefläche (17) und/oder einen Münzkanal (8) umfasst, wobei der Münzauflagefläche (17) bzw. dem Münzkanal (8) als Mittel zum Bewegen der Münze (1) zumindest abschnittsweise mindestens ein Magnetelement (4) zur Erzeugung eines die Münze (1) befördernden Wander-Magnetfeldes zugeordnet ist.

3. Transporteinrichtung nach Anspruch 2, **dadurch gekennzeichnet, dass** das Magnetelement (4) mit einer Steuerung (26) in Verbindung steht, die mit der das Vorhandensein einer Münze (1) erkennenden Detektionseinrichtung (25) gekoppelt ist, um das die Münze (1) befördernde Wander-Magnetfeld bedarfsweise zu erzeugen.

4. Transporteinrichtung nach einem der Ansprüche 2 bis 3, **dadurch gekennzeichnet, dass** das Magnetelement (4) in einem Bereich der Münzauflagefläche (17) bzw. des Münzkanals (8) angeordnet ist, in dem eine Beschleunigung der Münze (1) zu deren Transport erforderlich ist, vorzugsweise an einen potenziell höher gelegenen Ort, insbesondere in oder vor einem bogenförmigen Verlaufsabschnitt oder einem Steigungsabschnitt, oder einem Gefälleabschnitt mit geringer Neigung.

5. Transporteinrichtung nach einem der Ansprüche 2 bis 4, **dadurch gekennzeichnet, dass** als Magnetelement (4) mindestens ein rotierender Dauermagnet (13) oder mehrere auf dem Umfang eines Drehkörpers (11) angeordnete Einzelmagnete oder eine Elektromagnetanordnung (19) vorgesehen sind.

6. Transporteinrichtung nach Anspruch 3 oder 5, **dadurch gekennzeichnet, dass** die Steuerung (26) die Spannungsversorgung einer Spulenanordnung der Elektromagnete der Elektromagnetanordnung (19) regelt.

7. Transporteinrichtung nach einem der Ansprüche 5 bis 6, **dadurch gekennzeichnet, dass** die Elektromagnete die Münzauflagefläche (17) und/oder den Münzkanal (8) bilden.

8. Transporteinrichtung nach Anspruch 7, **dadurch gekennzeichnet, dass** ein im Wesentlichen E-förmiges oberes Joch (2) spulenumwickelte Anker (5) aufweist, wobei die Münzauflagefläche (17) bzw. der Münzkanal (8) zwischen freien Stirnseiten (7) der Anker (5) und einem dazu beabstandeten unteren Joch (2) ausgebildet ist.

9. Transporteinrichtung nach Anspruch 3 oder 5, **dadurch gekennzeichnet, dass** die Steuerung (26) die Spannungsversorgung eines die Dauermagnete (13) bzw. den Drehkörper (11) in Rotation versetzenden Elektromotors (10) regelt.

10. Transporteinrichtung nach Anspruch 1, **dadurch gekennzeichnet, dass** einem Münzkanal (8) als Mittel zum Bewegen der Münze (1) ein Ventilator (32) zum Erzeugen einer die Münze (1) transportierenden Luftströmung zugeordnet ist, der zu seiner bedarfsweisen Spannungsversorgung mit der Steuerung (26) in Verbindung steht, die mit der das Vorhandensein einer Münze (1) erkennenden Detektionseinrichtung (25) gekoppelt ist.

11. Gerät, insbesondere Unterhaltungsspielgerät, mit einem Münzeinwurfschlitz (22), der durch einen Münzkanal (8) mit einem Münzprüfer und einer Münzkasse (33) verbunden ist, wobei dem Münzkanal (8) zumindest abschnittsweise eine Transporteinrichtung (21) nach einem der Ansprüche 1 bis 10 zugeordnet ist.

12. Gerät, insbesondere Unterhaltungsspielgerät, mit einer Auszahleinheit (34) für Münzen (1), der eine Transporteinrichtung (21) nach einem der Ansprüche 1 bis 10 zugeordnet ist, wobei die Steuerung (26) der Auszahleinheit (34) mit den Mitteln und/oder der Detektionseinrichtung (25) gekoppelt ist.

13. Gerät nach Anspruch 12, **dadurch gekennzeichnet, dass** einem Münzstapelrohr (20) zur Einspeisung und/oder zur Ausgabe einer einzelnen Münze (1) die Transporteinrichtung (21) vor- oder nachgeschaltet ist.

14. Gerät nach Anspruch 12 oder 13, **dadurch gekennzeichnet, dass** die Auszahleinheit (34) mehrere hintereinander angeordnete Münzstapelrohre (20) mit unterschiedlichen Durchmessern umfasst, wobei die Münzen (1) mittels der Transporteinrichtung (21) zur Sortierung nach ihrem Durchmesser oberhalb der Münzstapelrohre (20) von dem Münzstapelrohr (20) mit dem kleinsten Durchmesser zu dem Münzstapelrohr (20) mit dem größten Durchmesser förderbar sind.

## Claims

1. Conveyor device for coins (1), comprising means for moving at least one coin (1) in a predetermined movement direction, which differs from the effective direction of gravity, under a force uninfluenced by a moved mechanical component, **characterized in that** the conveyor device (21) is arranged inside a machine, which is to be operated with coins (1), and is coupled to a detection device (25), which identifies the presence of the coin (1), in order to accelerate the coins (1) in the predetermined movement direction (28) as required.

2. Conveyor device according to Claim 1, **characterized in that** the machine comprises a coin support surface (17) and/or a coin channel (8), at least one magnet element (4) for generating a traveling magnetic field conveying the coin (1) being associated with the coin support surface (17) or the coin channel (8) as means for moving the coin (1), at least in portions.

3. Conveyor device according to Claim 2, **characterized in that** the magnet element (4) is connected to a control system (26) that is coupled to the detection device (25), which identifies the presence of a coin (1), in order to generate as required the traveling magnetic field conveying the coin (1).

4. Conveyor device according to one of Claims 2 to 3, **characterized in that** the magnet element (4) is arranged in a region of the coin support surface (17) or of the coin channel (8) in which an acceleration of the coin (1) for transport thereof is necessary, preferably at a location potentially arranged higher, in particular in or before an arch-shaped course portion or an ascending portion, or a descending portion with low incline.

5. Conveyor device according to one of Claims 2 to 4, **characterized in that** at least one rotating permanent magnet (13) or a plurality of individual magnets arranged on the periphery of a rotating body (11) or an electromagnet arrangement (19) are provided as a magnet element (4).

6. Conveyor device according to Claim 3 or 5, **characterized in that** the control system (26) controls the voltage supply of a coil arrangement of the electromagnets of the electromagnet arrangement (19).

7. Conveyor device according to one of Claims 5 to 6, **characterized in that** the electromagnets form the coin support surface (17) and/or the coin channel (8).

8. Conveyor device according to Claim 7, **characterized in that** a substantially E-shaped upper yoke (2) comprises coil-wound armatures (5), the coin support surface (17) or the coin channel (8) being formed between free end faces (7) of the armatures (5) and a lower yoke (2) distanced therefrom.

9. Conveyor device according to Claim 3 or 5, **characterized in that** the control system (26) controls the voltage supply of an electric motor (10) rotating the permanent magnets (13) or the rotating body (11).

10. Conveyor device according to Claim 1, **characterized in that** a fan (32) for generating an airflow transporting the coin (1) is associated with a coin channel (8) as means for moving the coin (1) and is connected to the control system (26) so as to be supplied with voltage as required, the control system being coupled to the detection device (25), which identifies the presence of a coin (1).

11. Machine, in particular an amusement machine, comprising a coin slot (22) that is connected by a coin channel (8) to a coin inspector and a coin cash box (33), a conveyor device (21) according to one of Claims 1 to 10 being associated with the coin channel (8), at least in portions.

12. Machine, in particular an amusement machine, comprising a counting unit (34) for coins (1), a conveyor device (21) according to one of Claims 1 to 10 being associated with said counting unit, the control system (26) of the counting unit (34) being coupled to the means and/or the detection device (25).

13. Machine according to Claim 12, **characterized in that** the conveyor device (21) is arranged upstream or downstream of a coin stack tube (20) for feeding in and/or for dispensing an individual coin (1).

14. Machine according to Claim 12 or 13, **characterized in that** the counting unit (34) comprises a plurality of coin stack tubes (20), which are arranged in succession and have different diameters, the coins (1) being transportable above the coin stack tubes (20) by means of the conveyor device (21) from the coin stack tube (20) having the smallest diameter to the coin stack tube (20) having the largest diameter in order to be sorted in accordance with their diameter.

## Revendications

1. Dispositif de transport pour pièces de monnaie (1) avec des moyens pour le déplacement d'au moins une pièce de monnaie (1) dans une direction de déplacement prédéterminée, qui ne correspond pas à la direction d'action de la gravité, sous une force libre de l'action d'un composant mécanique en mouvement, **caractérisé en ce que** le dispositif de transport (21) est disposé à l'intérieur d'un appareil à actionner avec des pièces de monnaie (1) et est couplé à un dispositif de détection (25) reconnaissant la présence de la pièce de monnaie (1), afin d'accélérer au besoin les pièces de monnaie (1) dans la direction de déplacement prédéterminée (28).

2. Dispositif de transport selon la revendication 1, **caractérisé en ce que** l'appareil comprend une face de dépôt de pièces de monnaie (17) et/ou un canal pour pièces de monnaie (8), dans lequel au moins un élément magnétique (4) est associé au moins localement à la face de dépôt de pièces de monnaie (17) ou au canal pour pièces de monnaie (8) comme moyen pour déplacer la pièce de monnaie (1) afin de produire un champ magnétique progressif transportant la pièce de monnaie (1).

3. Dispositif de transport selon la revendication 2, **caractérisé en ce que** l'élément magnétique (4) est en liaison avec une commande (26), qui est couplée au dispositif de détection (25) reconnaissant la présence d'une pièce de monnaie (1), afin de produire le champ magnétique progressif transportant la pièce de monnaie (1).

4. Dispositif de transport selon l'une des revendications 2 à 3, **caractérisé en ce que** l'élément magnétique (4) est disposé dans une région de la face de dépôt de pièces de monnaie (17) ou du canal pour pièces de monnaie (8), dans laquelle une accélération de la pièce de monnaie (1) est nécessaire pour son transport, de préférence à un endroit situé potentiellement plus haut, en particulier dans ou avant une partie de trajectoire en forme d'arc ou une partie de montée, ou une partie de descente de faible inclinaison.

5. Dispositif de transport selon l'une quelconque des revendications 2 à 4, **caractérisé en ce qu'**il est prévu comme élément magnétique (4) au moins un aimant permanent tournant (13) ou plusieurs aimants individuels disposés sur la périphérie d'un corps tournant (11) ou un agencement d'électroaimants (19).

6. Dispositif selon la revendication 3 ou 5, **caractérisé en ce que** la commande (26) règle l'alimentation de tension d'un agencement de bobines des électroaimants de l'agencement d'électroaimants (19).

7. Dispositif de transport selon l'une quelconque des revendications 5 à 6, **caractérisé en ce que** les électroaimants forment la face de dépôt de pièces de monnaie (17) et/ou le canal pour pièces de monnaie (8).

8. Dispositif de transport selon la revendication 7, **caractérisé en ce qu'**une armature supérieure (2) essentiellement en forme de E présente des induits (5) entourés par des bobines, dans lequel la face de dépôt de pièces de monnaie (17) ou le canal pour pièces de monnaie (8) est formé(e) entre des côtés frontaux libres (7) des induits (5) et une armature inférieure (2) espacée de ceux-ci.

9. Dispositif de transport selon la revendication 3 ou 5, **caractérisé en ce que** la commande (26) règle l'alimentation de tension d'un moteur électrique (10) entraînant en rotation les aimants permanents (13) ou le corps tournant (11).

10. Dispositif de transport selon la revendication 1, **caractérisé en ce qu'**un ventilateur (32) destiné à produire un écoulement d'air transportant la pièce de monnaie (1) est associé à un canal pour pièces de monnaie (8) comme moyen pour le déplacement de la pièce de monnaie (1), lequel est en liaison, pour son éventuelle alimentation de tension, avec la commande (26) qui est couplée au dispositif de détection (25) reconnaissant la présence d'une pièce de monnaie (1).

11. Appareil, en particulier appareil de jeu de loisirs, avec une fente d'insertion de pièces de monnaie (22), qui est reliée à un contrôleur de pièces de monnaie et à une caisse (33) de réception de pièces de monnaie par un canal pour pièces de monnaie (8), dans lequel un dispositif de transport (21) selon l'une quelconque des revendications 1 à 10 est associé au moins en partie au canal pour pièces de monnaie (8).

12. Appareil, en particulier appareil de jeu de loisirs, avec une unité de paiement (34) pour des pièces de monnaie (1), à laquelle un dispositif de transport (21) selon l'une quelconque des revendications 1 à 10 est associé, dans lequel la commande (26) de l'unité de paiement (34) est couplée aux moyens et/ou au dispositif de détection (25).

13. Appareil selon la revendication 12, **caractérisé en ce que** le dispositif de transport (21) est installé en amont ou en aval d'un tube d'empilement de pièces de monnaie (20) pour la réception et/ou pour la distribution d'une pièce de monnaie individuelle (1).

14. Appareil selon la revendication 12 ou 13, **caractérisé en ce que** l'unité de paiement (34) comprend plusieurs tubes d'empilement de pièces de monnaie (20) de diamètres différents, disposés l'un derrière l'autre, dans lequel les pièces de monnaie (1) peuvent être transportées au moyen du dispositif de transport (21), pour le triage selon leur diamètre, au-dessus des tubes d'empilement de pièces de monnaie (20) du tube d'empilement de pièces de monnaie (20) ayant le plus petit diamètre au tube d'empilement de pièces de monnaie (20) ayant le plus grand diamètre.
